# EUROPÄISCHE PATENTSCHRIFT

(11) **EP 2 698 570 B1**
(45) Veröffentlichungstag und Bekanntmachung des Hinweises auf die Patenterteilung: **14.03.2018**
(21) Anmeldenummer: 13003839.1
(22) Anmeldetag: 01.08.2013
(51) Int. Cl.: G01M 3/02, G01M 3/24, F16K 37/00, G01M 3/28

(54) **Verfahren zum Quantifizieren eines Leckagedurchflusses an einem Stellgerät**
Method for quantifying a leakage flow at a positioning device
Procédé de quantification d'un débit de fuite sur un appareil de réglage

(30) Priorität: 16.08.2012 DE 102012016295
(43) Veröffentlichungstag der Anmeldung: 19.02.2014
(73) Patentinhaber: Samson Aktiengesellschaft, 60314 Frankfurt (DE)
(72) Erfinder: Kiesbauer, Jörg, 64859 Eppertshausen (DE)
(74) Vertreter: Schmid, Nils T.F.

(56) Entgegenhaltungen:
- EP-A1- 0 637 713
- DE-A1-102007 045 529
- DE-C1- 10 218 830
- KIESBAUER J: "NEUES INTEGRIERTES DIAGNOSEKONZEPT BEI DIGITALEN STELLUNGSREGLERN//NEW INTEGRATED DIAGNOSTIC STRATEGY FOR DIGITAL POSITIONERS", AUTOMATISIERUNGSTECHNISCHE PRAXIS - ATP, OLDENBOURG INDUSTRIEVERLAG, MUNCHEN, DE, vol. 46, no. 4, 1 April 2004 (2004-04-01), pages 40-48, XP001248670, ISSN: 0178-2320

## Beschreibung

Die Erfindung betrifft ein Verfahren zum Quantifizieren eines insbesondere verschleißbedingten Leckagedurchflusses an einem eine Prozessströmung insbesondere konstanten Strömungsdrucks drosselnden Prozessstellventil eines Prozessfeldgeräts, wobei sich das Prozessstellventil in der geschlossenen Stellung befindet.

Die Verfahrens- und Prozesstechnik ist bei der Verschleißdiagnose darauf beschränkt, eine Leckage an einem Prozessstellventil zu identifizieren, indem beispielsweise die Überschreitung eines nicht mehr akzeptablen Leckagezustands detektiert wird. Weitergehende Aussagen über den Verschleißverlauf sowie Prognosen der Verschleißentwicklung sind nur mit auf wendiger und teurer Detektiertechnik möglich.

Prozessstellventile, wie Stellungsregelungsventile oder Notverschlussventile, sind einer Prozessfluidströmung ausgesetzt, die je nach Prozesstechnik unterschiedliche Zusammensetzungen aufweist. Eine Prozessfluidströmung mit einem hohen Festkörperanteil führt verstärkt zu Verschleiß an dem den Durchfluss regelnden Stellventil. Unterschiedlichste Betriebsphänomene, wie Korrosion, Abrasion, Kavitation oder Flashing, können ebenfalls zu einem verstärkten Verschleiß des Ventilglieds führen. Ein verschlissenes Ventilglied des Stellventils kann in erster Linie nicht mehr genügend die Prozessfluidströmung absperren. Die Leckage kann zu einem Produktverlust, damit zu einem weniger effizienten Prozess oder zu einem Sicherheitsrisiko für die Gesamtanlage führen. Die Überwachung der Leckage vor allem während des Betriebs der prozesstechnischen Anlage hat eine große Bedeutung für die Funktionsfähigkeit und die Verlässlichkeit des Stellgeräts in der prozesstechnischen Anlage.

In der Literatur der Prozesstechnik mit Stellventilen sind Lösungsansätze angedacht, bei denen die sogenannte innere Leckage von Stellgeräten detektiert werden soll. Aus dem von Jörg Kiesbauer und Heinfried Hoffmann verfassten Artikel "Detektion der Innenleckage von Stellgeräten" (Zeitschrift atp 42 (2000), Heft 11) ist eine Detektionsmethode vorgeschlagen, bei der ein Körperschallsensor und ein Stellungsregler verwendet werden, um die An- oder Abwesenheit kleinerer Durchflussmengen wegen der inneren Leckage zu erfassen.

Der ebenfalls von Jörg Kiesbauer verfasste Artikel "Neues Integriertes Diagnosekonzept bei digitalen Stellungsreglern" (Zeitschrift atp 46 (2004), Heft 4) stellt ein Diagnosekonzept vor, bei dem im Stellungsregler online Daten gesammelt und so ausgewertet werden, dass daraus on-board-Statusmeldungen erzeugt werden.

Aus DE 10 2007 045 529 A1 ist ein Diagnoseverfahren für ein Stellventil, wie ein Schließventil, bekannt. In einem ersten Schritt wird der Strömungsdruck an der Zulaufleitung des Stellventils erfasst und mit einem ersten Referenzwert verglichen, der einem Kennlinienfeld entspricht, dessen Parameter der Kv-Wert und die Leckageklasse des Ventils sind. In einem zweiten Schritt wird der Körperschallpegel gemessen und mit einem zweiten Referenzwert verglichen, der bei Inbetriebnahme als der Schallpegel beim Übergang von turbulenter Strömung in kavitationsbehaftete Strömung bestimmt ist. Das bekannte Diagnoseverfahren stellt eine Grenzwertbetrachtung der Leckagesituation dar.

EP 0 637 713 A1 beschreibt ein Diagnose-System für Regel- und Absperrventile, das einen Prozessor eines intelligenten Stellungsreglers als digitalen Signalprozessor benutzt.

DE 10 2007 045 529 A1 betrifft ein Diagnosesystem für ein Ventil, das über einen Antrieb betätigbar und in eine Rohrleitung einsetzbar ist.

Es ist Aufgabe der Erfindung, die Nachteile des Stands der Technik zu überwinden, insbesondere ein Verfahren zum Quantifizieren eines insbesondere verschleißbedingten Leckagedurchflusses an einem Prozessstellgerät bereitzustellen, wobei insbesondere genauere Mengenangaben über die Leckage erhaltbar sein sollen.

Diese Aufgabe wird durch die Merkmale der Ansprüche 1 oder 8 gelöst. Danach ist ein Verfahren zum Quantifizieren eines Leckagedurchflusses an einem eine Prozessströmung insbesondere konstanten Strömungsdrucks drosselnden Stellventil vorgesehen. Beim Quantifizieren des Leckagedurchflusses wird erfindungsgemäß der Leckagedurchfluss nicht unmittelbar durch Sensorik gemessen, sondern über Erfahrungsdaten, die an einem intakt arbeitenden Referenzstellventil insbesondere gleicher Bauweise oder an dem Prozessventil selbst im Neuzustand ermittelt werden. Das erfindungsgemäße Verfahren kann in zwei Verfahrensetappen unterteilt werden, in einer vorbereitenden Phase und einer Auswertung während des Betriebs des Prozessstellventils. In der vorbereitenden Phase werden unter Verwendung des intakten Referenzstellventils gleicher oder ähnlicher Bauweise mehrere Referenzdurchflusswerte ermittelt. Diese Vorabermittlung kann mittels einer tatsächlichen Sensorik zur Bestimmung der Durchflussmenge am Referenzstellventil erreicht werden. Dabei wird das Referenzstellventil in mehrere Referenzöffnungsstellungen gebracht, und für jede Referenzöffnungsstellung wird der jeweilige Referenzdurchflusswert gemessen. Der Referenzdurchflusswert kann beispielsweise dadurch ermittelt werden, dass über die Position des Referenzstellventils und den herrschenden konstanten Prozessfluidströmungsdruck der stellungsabhängige Durchflusswert berechnet wird. Gleichzeitig wird beim Ermitteln des jeweiligen Referenzdurchflusswerts ein in der Umgebung des Referenzstellventils erfasster Referenzkörperschall aufgenommen und abgespeichert und dem jeweiligen Referenzdurchflusswert zugeordnet. Auf diese Weise werden Scharen von Wertepaaren geschaffen, gemäß deren jeder Referenzkörperschall und Strömungsdruck einem bestimmten Referenzdurchflusswert zugeordnet werden kann.

In der zweiten Phase des Verfahrens wird in Echtzeit des Prozesses ein Momentankörperschall an dem geschlossenen Prozessventil ermittelt und ein Strömungsdruck, insbesondere aus der Historie vor dem Schließen des Prozessventils zugeordnet. Anhand des ermittelten Momentankörperschalls wird vorzugsweise im Wesentlichen in Echtzeit über einen Identitäts-oder Näherungsvergleich der dem ermittelten Momentan-Körperschall nächstkommende Referenzkörperschall identifiziert. Aufgrund der gespeicherten Wertepaare ist es nun möglich, den zu quantifizierenden Leckagedurchfluss dadurch zu ermitteln, dass über den identifizierten Referenz-Körperschall der zugeordnete Referenzdurchflusswert dem Leckagedurchfluss gleichgesetzt wird. Die Erfindung bedient sich der überraschenden Erkenntnis, dass die Schallentwicklung eines intakten Referenzstellventils bei dessen allmählicher Öffnung aus der geschlossenen Stellung identisch oder ähnlich zu der eines verschlissenen Prozessstellventils mit Leckage ist.

Die Vergleichbarkeit der Schallpegel ist vor allem dann gewährleistet, wenn der Prozessfluidströmungsdruck bei der Erhöhung der Referenzdaten dem des zeitechten Prozessbetriebs entspricht. Bei der Erstellung der Referenzdaten wird das intakte Stellventil entweder kontinuierlich oder schrittweise (0,1 %, 0,2 %, 0,5 %, 1 %, 2 %, 3 % ...) geöffnet, wobei zu jeder Öffnungsstellung oder kontinuierlich der Schallpegel aufgenommen und abgespeichert wird. Durch die Zuordnung der Öffnungsstellung bei bekanntem Prozessfluidstrom ist die Prozessdurchflussrate ermittelbar. Wird nun ein Prozessstellventil in Echtzeit überwacht, kann anhand der Momentanschalldruckwerte ein Rückschluss auf den Leckagedurchfluss getroffen werden, weil über die Zuordnung der Schallpegel die Öffnungsrate, die durch den Verschleiß entstanden ist, festgestellt werden kann.

Bei einer bevorzugten Ausführung der Erfindung wird ein am Referenzstellventil herrschender Referenz-Prozessfluidströmungsdruck, insbesondere eine Strömungskraft oder eine Referenz-Prozessfluidströmungsdruckdifferenz, vorab in der Vorbereitungsphase erfasst. Es können mehrere Sätze Schallpegel/Öffnungsstellungs-Wertepaare abhängig von dem jeweilig herrschenden Prozessfluidströmungsdruck erstellt werden. Der Referenzdurchflusswert kann entweder unmittelbar durch Durchflussmengensensoren erfasst werden oder mittelbar aufgrund der Öffnungsrate des Referenzstellventils und der erfassten Druckwerte. Bei der Echtzeiterfassung des Momentanschallpegels kann die entsprechende Kennlinie für den vorliegenden konstanten Prozessfluidströmungsdruck gewählt werden. Anhand der Zuordnung des Referenzkörperschalls zum Referenzdurchflusswert kann auf den Leckagedurchfluss geschlossen werden.

Bei der Erfindung wird zum Präzisieren des Identitäts- oder Näherungsvergleichs die an dem Prozessventil herrschende Momentanströmungskraft ermittelt. Vorzugsweise wird die Momentanströmungskraft über einen pneumatischen Antriebsdruck bestimmt, der zum Halten des Prozessventils in dessen Schließstellung aufzubringen ist.

Eine weitere Ausbildung des Verfahrens beinhaltet, dass die an dem Prozessventil herrschende Momentan-Strömungskraft oder ein Momentan-Durchfluss direkt vor dem Schließen des Prozessstellventils ermittelt und gespeichert wird und der für den zu quantifizierenden Leckagedurchfluss zuzuordnende Referenz-Körperschall unter Berücksichtigung der vor dem Schließvorgang gemessenen Momentan-Strömungskraft und des nach dem Schließen erfassten Momentan-Körperschalls bestimmt wird. Es sei klar, dass bei der Zuordnung des Momentan-Körperschalls zu einem Referenz-Körperschall und damit zum Durchfluss auch der Momentan-Strömungsdruck zu berücksichtigen ist, wenn dieser sich zeitlich verändert. Wenn aber eine nur zeitlich langsame Variation des Strömungsdrucks zu erwarten ist, kann vorteilhafterweise der Momentan-Strömungsdruck dadurch bestimmt werden, dass der Strömungsdruck vor dem Schließen des Prozessstellventils erfasst wird.

Bei einer bevorzugten Ausführung der Erfindung werden die Referenzöffnungsstellungen derart gewählt, dass deren Durchlassquerschnitte typischen Leckagedurchlassquerschnitten, die auf Verschleißhistoriedaten von Stellventilen mit der Bauweise des Prozessventils basieren, entsprechen. Auf diese Weise ist eine möglichst sichere Schätzung des Leckagedurchflusswerts anhand des Referenzdurchflusswerts realisiert.

Bei einer Weiterbildung der Erfindung wird eine Schallpegel/Öffnungsstellung-Kennlinie für das intakte Referenzstellventil erstellt, um jedem ermittelten Momentan-Körperschall über die Kennlinie eine Referenz-Öffnungsstellung zuzuordnen, die mit einer Leckageöffnung des Prozessstellventils gleichzusetzen ist. Aufgrund des herrschenden Prozessströmungsfluiddrucks ist der Leckagedurchfluss ermittelbar.

Bei einer bevorzugten Ausführung der Erfindung wird der Momentan-Körperschall überwacht und insbesondere bei Überschreitung eines festgelegten zulässigen Referenz-Körperschallwerts ein Warnsignal ausgegeben.

Bei einer bevorzugten Ausführung der Erfindung wird ein Verlauf des Momentan-Körperschalls beim Öffnen des Prozessventils erfasst und mit einem Referenzverlauf des Referenz-Körperschalls beim Öffnen des intakten Referenzventils verglichen, um Details über den durch Verschleiß entstandenen Leckagezustand zu eruieren.

Des Weiteren kann beispielsweise eine Vorrichtung zum Quantifizieren eines Momentan-Leckagedurchflusses an einem eine Prozessströmung insbesondere konstanten Strömungsdrucks drosselnden Prozessventil ausgelegt werden, eine solche Vorrichtung ist nicht Teil der Erfindung. Eine solche Vorrichtung, die nicht Teil der Erfindung ist, hat einen Datenspeicher, in dem mehrer Referenzdurchflusswerte, die unter Verwendung eines intakten Referenzstellventils ermittelt sind, indem das Referenzstellventil in mehrere Referenzöffnungsstellungen gebracht wird und für jede Referenzöffnungsstellung der jeweilige Referenzdurchflusswert gemessen wird, und ein Referenz-Körperschall abgespeichert sind, der für jede Referenzöffnungsstellung in der Umgebung des Referenzstellventils gemessen ist und dem jeweiligen Referenzdurchflusswert zugeordnet ist. Des Weiteren hat eine solche Vorrichtung, die nicht Teil der Erfindung ist, einen Körperschallsensor zum Messen von Momentankörperschall an dem geschlossenen Prozessventil bzw. eine Datenverarbeitungselektronik, die anhand eines Identitäts- oder Näherungsvergleichs den dem Momentan-Körperschall nächstkommenden Referenzkörperschall identifiziert und den dem identifizierten Referenzkörperschall zugeordneten Referenzdurchflusswert mit dem zu quantifizierenden Leckagedurchfluss gleichsetzt.

Es sei klar, dass eine Vorrichtung, die nicht Teil der Erfindung ist, entsprechend der Funktionsweise des erfindungsgemäßen Verfahrens ausgelegt sein kann.

Ein Momentan-Betriebsparameter, wie der Momentan-Körperschall, die Momentan-Strömungskraft, der Momentan-Durchfluss, etc., kann zu einem bestimmten Betriebszeitpunkt, der vorbestimmt ist oder gemäß einer Regelung festgelegt ist, von einem entsprechenden Sensor erfasst werden. Mit dem Verlauf des Momentan-Betriebsparameters kann eine zeitabhängige und/oder ventilstellungsabhängige Entwicklung des Betriebsparameters, wie dessen Betrag, vorliegen.

Unteraspekte der Erfindung können in den Unteransprüchen angegeben sein.

Weitere Merkmale, Eigenschaften und Vorteile der Erfindung werden durch die folgende Beschreibung einer bevorzugten Ausführung anhand der beiliegenden Zeichnungen deutlich, in denen zeigen:
- Figur 1: eine Prinzipskizze eines pneumatischen Stellgeräts, welches nicht Teil der Erfindung ist;
- Figur 2: ein Stelldruck-Hub-Diagramm, das eine sogenannte Ventilsignatur des pneumatischen Stellgeräts nach Figur 1 abbildet, bei der der Zusammenhang zwischen dem pneumatischen Antriebsdruck und der Ventilstellung aufgezeigt ist;
- Figur 3: ein Körperschall-Hub-Diagramm eines intakten pneumatischen Stellgeräts gemäß Figur 1;
- Figur 4: ein weiteres Stelldruck-Hub-Diagramm, bei dem der Stelldruck längs der Ventilstellung im Prozessbetrieb bei einem konstanten Prozessmediumsdruck dargestellt ist; und
- Figur 5: ein weiteres Körperschall-Hub-Diagramm, bei dem der Körperschall eines verschlissenen Stellgeräts dem Körperschallverlauf eines intakten Stellgeräts abhängig von der Ventilstellung ausgegeben ist.

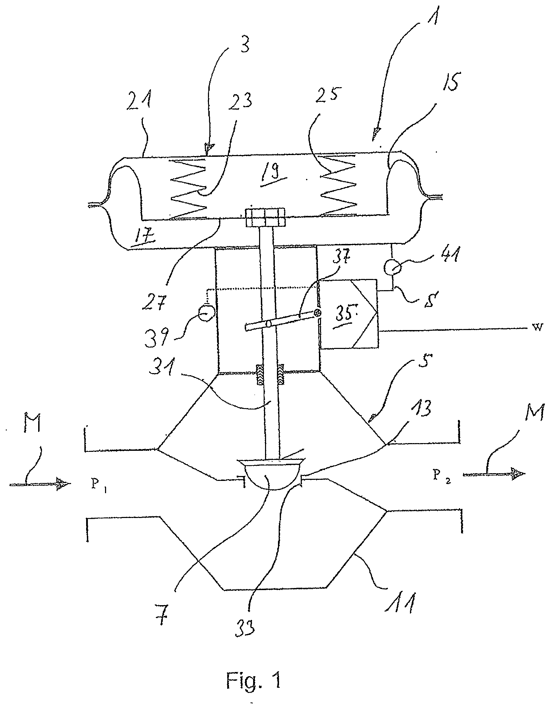

In Figur 1 ist ein erfindungsgemäßes pneumatisches Stellgerät im Allgemeinen mit der Bezugsziffer 1 versehen, das einen pneumatischen Stellantrieb 3 und ein Stellventil 5 mit einem Ventilglied 7 umfasst. Das Ventilglied 7 dient dazu, den Durchfluss eines Prozessmediums M durch eine Rohrleitung 11 einzustellen. Das Ventilglied 7 ist translatorisch zwischen einer Schließstellung, die in Figur 1 angedeutet ist, und einer Öffnungsstellung (nicht dargestellt) verlagerbar. Zum Verschließen der Rohrleitung sitzt das Ventilglied auf dem Ventilsitz 13. Beim intakten Stellventil 5 gelangt kaum ein Prozessmedium M von der einen Seite der Rohrleitung zur anderen.

Um das Ventilglied 7 translatorisch anzuheben und zum Ventilsitz 13 abzusenken, dient der pneumatische Stellantrieb 3, der über eine Innenmembran 15 in eine pneumatische Arbeitskammer 17 und eine Rückstellkammer 19 unterteilt ist. In der Rückstellkammer 19 innerhalb des Antriebsgehäuses 21 sind Rückstellfedern 23, 25 angeordnet, die auf eine Stellplatte 27 drücken, die mit einer Stellstange 31 gekoppelt ist. Die Druckfedern 23, 25 bewirken eine Verlagerung des Ventilglieds 7 auf den Ventilsitz 13 zu. Um den Durchgang 33 an dem Ventilsitz zu öffnen, wird der pneumatische Antrieb 3 mit einem pneumatischen Stelldruck S versorgt, der in die pneumatische Arbeitskammer 17 gelangt und gegen die Federkraft der Druckfedern 23, 25 eine Verlagerung des Ventilglieds 7 von dem Ventilsitz 13 veranlasst. Die Höhe des Stelldrucks S wird anhand eines Stellungsreglers 35 berechnet, der ein elektrisches Sollpositionssignal W von einer nicht dargestellten Leitwarte erhält. Der Stellungsregler empfängt von einem Positionssensor 37 die Momentanstellung des Ventilglieds 7. Zudem empfängt der Stellungsregler 35 Schallpegelwerte von einem Schallpegelsensor 39, der mit dem Stellungsregler 35 verbunden ist. Zusätzlich ist ein Drucksensor 41 vorgesehen, der den Stelldruck S mittelt und entsprechende Druckmesssignale an den Stellungsregler 35 abgibt.

Das Prozessmedium M gelangt zum Ventilsitz mit einem Strömungsdruck P1, der im Verlauf des Stellventils zu einem Strömungsausgangsdruck P2 gedrosselt ist. Die Druckdifferenz P1-P2 der Prozessmediumsströmung bewirkt ein Anheben des Ventilglieds 7 entgegen der Federkräfte der Druckfedern 23, 25.

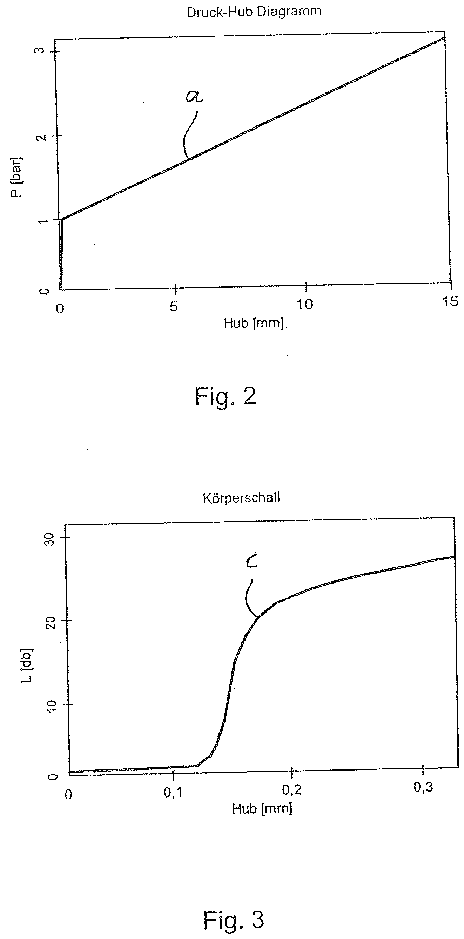

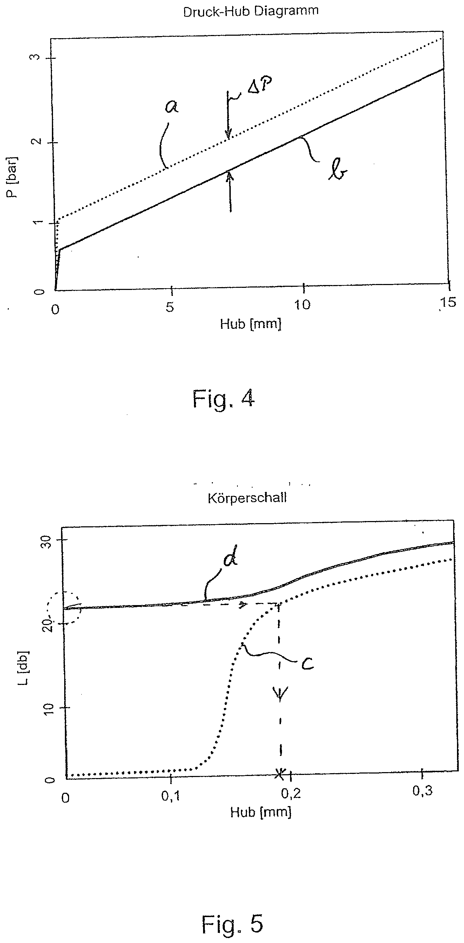

Der Stellungsregler hat eine Vorrichtung zum Melden einer verschleißbedingten Leckage des Stellventils 5 sowie zum Berechnen der Größe der Leckage. Dazu hat der Stellungsregler 35 einen Datenspeicher, in dem eine Referenzdurchflusskennlinie abgelegt ist, die unter Verwendung eines intakten Stellventils 5 ermittelt wurde. Die Kennlinie wird dadurch ermittelt, dass eine konstante Prozessfluidströmung M innerhalb der Rohrleitung 11 aufgebaut wird. Anschließend wird das intakte Stellventil von der geöffneten Stellung in die geschlossene Stellung gebracht, wobei der dazu notwendige pneumatische Stelldruck über den Sensor 41 gemessen wird. Über die sogenannte Ventilsignatur, ein stellventilspezifischer Zusammenhang zwischen dem Stelldruck und der Ventilstellung, die in Figur 2 anhand der Kurve a dargestellt ist, kann der tatsächlich vorliegende Strömungsdruck des Prozessmediums M an dem Ventilglied 7 ermittelt werden. Dazu wird die Differenz aus dem Stelldruck gemäß Ventilsignatur und dem tatsächlich gemessenen pneumatischen Stelldruck berechnet. In Figur 4 ist die Ventilsignatur in Form der Stelldruck-Hub-Kurve a ohne Prozessmedium strichliert dargestellt. Wie in Figur 2, benötigt der pneumatische Stellantrieb 3 mindestes 1 Bar, um entgegen der Druckkräfte der Druckfedern 23, 25 das Ventilglied 7 aus der Schließstellung zu bringen. Unterschreitet der Stelldruck S die 1-Bar-Grenze, so veranlassen die Druckfedern 23, 25 das Schließen des Stellventils 5. Die durchgezogene Kurve b gemäß Figur 4 stellt den tatsächlichen pneumatischen Stelldruck im Verlauf der Ventilstellungen zwischen 0 und 15 mm dar. Wie in Figur 4 ersichtlich ist, benötigt der pneumatische Stellantrieb 3 etwas weniger als die Hälfte des pneumatischen Stelldrucks gemäß Ventilsignatur. Die Druckdifferenz wird durch den Strömungsdruck des Prozessmediums M an dem Ventilglied 7 erzeugt. Insofern kann anhand der ermittelten Signale der Strömungsdruck ΔP an dem Ventilglied 7 ermittelt werden, der aufgrund der konstanten Prozessmediumsströmung M sich längs der Hubstellungen von 0 bis 15 mm konstant hält. Anhand des Strömungsdrucks ΔP kann mittels der Kenntnis der Ventilstellung eine Durchflussmenge, also der Durchflusswert, errechnet werden, der als Referenz in dem Datenspeicher des Stellungsreglers 35 abgelegt ist.

Während der Messung des pneumatischen Stelldrucks wird simultan der Körperschall über den Sensor 37 ermittelt. Der Körperschallverlauf des sich langsam öffnenden Ventilglieds 7, das nicht verschlissen ist, ist in Figur 3 dargestellt. Hierbei ist besonders interessant der Bereich, in dem gerade das Ventilglied 7 den Ventilsitz 13 verlässt. Dieser Öffnungsbereich liegt zwischen 0 und 0,3 mm. Die in Figur 3 dargestellte Körperschallverteilung längs des Ventilhubs ist eine Körperschallkurve eines intakten Stellventils 5. Diese Körperschallkennlinie c, bei der der Körperschall jeder Ventilstellung beispielsweise zwischen 0 und 0,3 mm zugeordnet ist, wird in dem Datenspeicher des Stellungsreglers 35 abgelegt.

Bei dem erfindungsgemäßen Verfahren wird das Quantifizieren des verschleißbedingten Leckageflusses an einem Stellventil nun dadurch realisiert, dass im Betrieb des Stellventils 5 das Stellventil 5 vollständig geschlossen wird, was über den Positionssensor 37 erkannt wird. In der geschlossenen Stellung wird über den Schallpegelsensor 39 der Körperschall erfasst und aufgezeichnet. Zusätzlich kann der Körperschallverlauf in dem kritischen Öffnungsbereich zwischen 0 und 0,3 mm als Kennlinie d erfasst werden.

In Figur 5, bei der die Körperschallkurve c punktiert dargestellt ist, ist der Körperschallverlauf d eines verschlissenen Stellventils gegenübergestellt. Bereits in der eigentlich vollständig verschlossenen Ventilposition (bei 0 mm Hub) herrscht ein Körperschallpegel von etwa 22 db, was auf einen Leckagedurchfluss an dem Ventilglied 7 schließen lässt. Der Stellungsregler kann bereits jetzt der nicht dargestellten Leitwarte ein Alarmsignal für das Vorliegen einer nicht vernachlässigbaren Leckage am Stellventil anzeigen. Zusätzlich kann der gemessene Schallpegel von 22db einen genauen Rückschluss über die Menge der Leckage an dem Stellventil aussagen. Hierzu wird angenommen, dass die Körperschallentwicklung eines verschlissenen Ventilglieds die gleiche darstellt, wie bei einem entsprechend gleich geöffneten, intakten Stellventil. Dieser Vergleich ist durch die gestrichelte Linie in Figur 5 dargestellt. Betrachtet man die Körperschallkurve c dahingehend, wann ein 22db-Körperschallpegel erzeugt wird, gelangt man zu einer Ventilöffnung von etwa 0,19 mm. Somit kann ein Rückschluss auf den Verschleiß des Ventilglieds 7 dahingehend gezogen werden, dass eine Leckageöffnung vorliegt, die etwa einer Ventilstellung von 0,19 mm des intakten Stellventils entspricht. Mittels des konstanten Prozessmediumsdruckes oder der Durchflussrate bei einem entsprechend geöffneten Stellventil kann ein Rückschluss auf den tatsächlichen Leckagedurchfluss anhand des Referenzdurchflusses gezogen werden.

Auch ein Vergleich der Kennlinien c-d in der Gesamtheit gibt Rückschlüsse auf die Art und Qualität des Verschleißzustands des Ventilglieds 7.

Im Hinblick auf die Nutzung der Schallpegeldaten und die Durchführung von Schallberechnung sei auf die Norm EN60534 - Teil 8 - 3/4 verwiesen.

### Bezugszeichenliste

- 1: Stellgerät
- 3: Stellantrieb
- 5: Stellventil
- 7: Ventilglied
- 11: Rohrleitung
- 13: Ventilsitz
- 15: Innenmembran
- 17: Arbeitskammer
- 19: Rückstellkammer
- 21: Antriebsgehäuse
- 23: Rückstellfeder
- 25: Rückstellfeder
- 27: Stellplatte
- 31: Stellstange
- 33: Durchgang
- 35: Stellungsregler
- 37: Positionssensor
- 39: Schallpegelsensor
- 41: Drucksensor

- M: Prozessmedium
- S: Stelldruck
- W: Sollpositionssignal
- P1: Strömungsdruck
- P2: Strömungsausgangsdruck

- a: Stelldruck-Hub-Kurve
- b: Stelldruck
- c: Körperschallkennlinie
- d: Körperschallverlauf

## Patentansprüche

1. Verfahren zum Quantifizieren eines Leckagedurchflusses an einem eine Prozessströmung drosselnden Prozessstellventil (1), wobei:
i) unter Verwendung eines intakten Referenzstellventils mehrere Referenzdurchflusswerte vorab ermittelt werden, indem das Referenzstellventil in mehrere Referenzöffnungsstellungen gebracht wird und für jede Referenzöffnungsstellung der jeweilige Referenzdurchflusswert gemessen wird;
ii) beim Ermitteln des jeweiligen Referenzdurchflusswerts ein in der Umgebung des Referenzstellventils erfasster Referenz-Körperschall dem jeweiligen Referenzdurchflusswert zugeordnet wird;
iii) ein Momentan-Körperschall am geschlossenen Prozessstellventil (1) ermittelt wird;
iv) über einen Identitäts- oder Näherungsvergleich der dem ermittelten Momentan-Körperschall nächstkommende Referenz-Körperschall identifiziert wird;
v) zum Präzisieren des Identitäts- oder Näherungsvergleichs die an dem Prozessstellventil herrschende Momentan-Strömungskraft ermittelt wird; und
vi) der zu quantifizierende Leckagedurchfluss mit dem dem identifizierten Referenz-Körperschall zugeordneten Referenzdurchflusswert gleichgesetzt wird.

2. Verfahren nach Anspruch 1, bei dem ein am Referenzstellventil herrschender Referenz-Prozessfluidströmungsdruck, nämlich eine Strömungskraft oder eine Referenz-Prozessfluidströmungsdruckdifferenz, vorab erfasst wird und gegebenenfalls daraus der Referenzdurchflusswert ermittelt wird.

3. Verfahren nach Anspruch 2, wobei bei dem Identitäts- oder Näherungsvergleich auch der Referenz-Prozessfluidströmungsdruck mit einem Momentan-Prozessfluidströmungsdruck, der am Prozessstellventil ermittelt wird, verglichen wird, um den nächstkommende Momentan-Körperschall zu identifizieren.

4. Verfahren nach einem der Ansprüche 1 bis 3, bei dem die an dem Prozessstellventil herrschende Momentan-Strömungskraft über einen pneumatischen Antriebsdruck bestimmt wird, der zum Halten des Prozessstellventils in dessen Schließstellung aufzubringen ist.

5. Verfahren nach den Ansprüchen 2 und 4, bei dem die an dem Prozessventil unmittelbar herrschende Momentan-Strömungskraft oder ein Momentan-Durchfluss vor dem Schließen des Prozessstellventils (1) ermittelt und gespeichert wird und der für den zu quantifizierenden Leckagedurchfluss zuzuordnende Referenz-Körperschall unter Berücksichtigung der Momentan-Strömungskraft vor dem Schließvorgang festgestellt wird.

6. Verfahren nach einem der vorstehenden Ansprüche, bei dem die Referenzöffnungsstellungen derart gewählt werden, dass deren Durchlassquerschnitte typischen Leckagedurchlassquerschnitten, die auf Verschleißhistoriedaten von Stellventilen mit der Bauweise des Prozessstellventils basieren, entsprechen.

7. Verfahren nach einem der vorstehenden Ansprüche, bei dem eine Schallpegel/Öffnungsstellung-Kennlinie für das intakte Referenzstellventil erstellt wird, um für jeden ermittelten Momentan-Körperschall über die Kennlinie die Referenz-Öffnungsstellung zuzuordnen, die als Leckageöffnung des Prozessstellventils ausgebbar ist.

8. Verfahren nach einem der vorstehenden Ansprüche, bei dem der Momentan-Körperschall überwacht wird und bei Überschreitung eines vorab festgelegten zulässigen Referenz-Körperschallwerts ein Warnsignal ausgegeben wird.

9. Verfahren nach einem der vorstehenden Ansprüche, bei dem ein Verlauf des Momentan-Körperschalls beim Öffnen des Prozessstellventils erfasst wird und mit einem Referenz-Verlauf des Referenz-Körperschalls beim Öffnen des intakten Referenzstellventils verglichen wird.

## Claims

1. A method for quantifying a leakage flow on a process control valve (1) that restricts a process stream, wherein:
i) an intact reference control valve is used to determine several reference flow values in advance by placing the reference control valve in several reference opening positions, and measuring the respective reference flow value for each reference opening position;
ii) when determining the respective reference flow value, a reference mechanical vibration acquired in the environment of the reference control valve is allocated to the respective reference flow value;
iii) an instantaneous mechanical vibration is determined on the closed process control valve (1);
iv) the reference mechanical vibration coming the closest to the determined instantaneous mechanical vibration is identified by way of an identity comparison or approximation comparison;
v) the instantaneous stream force prevailing on the process control valve is determined to specify the identity comparison or approximation comparison; and
vi) the leakage flow to be quantified is equated with the reference flow value allocated to the identified reference mechanical vibration.

2. The method according to claim 1, in which a reference process fluid stream pressure prevailing on the reference control valve, namely a stream force or reference process fluid stream pressure difference, is acquired in advance, and, if applicable, a reference flow value is determined from it.

3. The method according to claim 2, wherein during the identity comparison or approximation comparison, also the reference process fluid stream pressure is compared with an instantaneous process fluid stream pressure determined on the process control valve, so as to identify the closest instantaneous mechanical vibration.

4. The method according to one of the claims 2 to 3, in which the instantaneous stream force prevailing on the process control valve is determined via a pneumatic driving pressure to be applied for keeping the process control valve in its closed position.

5. The method according to the claims 2 and 4, in which the instantaneous stream force prevailing directly on the process valve or an instantaneous flow just before the process control valve (1) closes is determined and stored, and the reference mechanical vibration to be allocated for the leakage flow to be quantified is detected taking into account the instantaneous stream force prior to the closing process.

6. The method according to one of the preceding claims, in which the reference opening positions are selected such that their passage cross sections correspond to typical leakage passage cross sections based on wear history data of control valves having the design of the process control valve.

7. The method according to one of the preceding claims, in which a sound level/opening position characteristic is generated for the intact reference control valve, so as to allocate for each determined instantaneous mechanical vibration by way of the characteristic the reference opening position, which reference opening position can be output as the leakage opening of the process control valve.

8. The method according to one of the preceding claims, in which the instantaneous mechanical vibration is monitored, and a warning signal is output when a permissible reference mechanical vibration value prescribed in advance has been exceeded.

9. The method according to one of the preceding claims, in which a progression of the instantaneous mechanical vibration is acquired while opening the process control valve, and compared to a reference progression of the reference mechanical vibration while opening the intact reference control valve.

## Revendications

1. Procédé destiné à quantifier un débit de fuite sur une vanne de régulation de processus (1) étranglant un écoulement de processus, lors duquel
i) en utilisant une vanne de régulation de référence intacte, on détermine préalablement plusieurs valeurs de débit de référence en amenant la vanne de régulation de référence dans plusieurs positions d'ouverture de référence et pour chaque position d'ouverture de référence, on mesure la valeur de débit de référence ;
ii) lors de la détermination de la valeur de débit de référence concernée, on associe à la valeur de débit de référence concernée un bruit de structure de référence détecté dans l'environnement de la vanne de régulation de référence ;
iii) on détermine un bruit de structure momentané sur la vanne de régulation de processus (1) fermée ;
iv) par une comparaison d'identité ou d'approximation, on identifie le bruit de structure de référence se rapprochant le plus du bruit de structure momentané déterminé ;
v) pour préciser la comparaison d'identité ou d'approximation, on détermine la force d'écoulement momentanée régnant sur la vanne de processus ; et
vi) on égalise le débit de fuite que l'on veut quantifier avec la valeur de débit de référence associée au bruit de structure de référence identifié.

2. Procédé selon la revendication 1, lors duquel on détecte préalablement une pression d'écoulement de référence du fluide de processus, à savoir une force d'écoulement ou une pression différentielle d'écoulement de référence du fluide de processus et le cas échéant, on détermine à partir de celle-ci la valeur de débit de référence.

3. Procédé selon la revendication 2, lors duquel, lors de la comparaison d'identité ou d'approximation, on compare également la pression d'écoulement de référence du fluide de processus avec une pression d'écoulement momentanée du fluide de processus que l'on détermine sur la vanne de régulation de processus, pour identifier le bruit de structure momentané le plus approchant.

4. Procédé selon l'une quelconque des revendications 1 à 3, lors duquel la force d'écoulement momentanée régnant sur la vanne de régulation de processus est définie par une pression d'entraînement pneumatique qui doit être appliquée pour maintenir la vanne de régulation de processus dans sa position de fermeture.

5. Procédé selon les revendications 2 et 4, lors duquel on détermine et on mémorise la force d'écoulement momentanée régnant directement sur la vanne de processus ou un débit momentané avant la fermeture de la vanne de régulation de processus (1) et on constate avant le processus de fermeture le bruit de structure de référence qui doit être associé au débit de fuite que l'on veut quantifier, sous considération de la force d'écoulement momentanée.

6. Procédé selon l'une quelconque des revendications précédentes, lors duquel on choisit les positions d'ouverture de référence de telle sorte que leurs sections transversales de passage correspondent à des sections transversales typiques pour le passage de fuites, qui sont basées sur des données historiques d'usure de vannes de régulation du type de conception de la vanne de régulation de processus.

7. Procédé selon l'une quelconque des revendications précédentes, lors duquel on établit une courbe caractéristique de niveau sonore/d'ouverture pour la vanne de régulation de référence intacte, pour associer par l'intermédiaire de la courbe caractéristique, pour chaque bruit de structure momentané déterminé la position d'ouverture de référence pouvant être éditée comme ouverture de fuite de la vanne de régulation de processus.

8. Procédé selon l'une quelconque des revendications précédentes, lors duquel on supervise le bruit de structure momentané et lors d'un dépassement d'une valeur autorisée préalablement fixée pour le bruit de structure de référence, un signal d'avertissement est délivré.

9. Procédé selon l'une quelconque des revendications précédentes, lors duquel on détermine une courbe du bruit de structure momentané lors de l'ouverture de la vanne de régulation de processus et on la compare avec une courbe de référence du bruit de structure de référence, lors de l'ouverture de la vanne de régulation de référence.
